# EUROPEAN PATENT SPECIFICATION

(11) **EP 1 791 886 B1**
(45) Date of publication and mention of the grant of the patent: **16.07.2008**
(21) Application number: 05772834.7
(22) Date of filing: 05.08.2005
(51) Int. Cl.: C08G 18/68, C08K 5/00, C08K 3/36

(54) **POLYISOCYANATE AND WATERGLASS BASED HYBRID RESINS, COMPOSITES CONTAINING THEM AND PROCESS TO PRODUCE THEM**
HYBRIDHARZE AUF BASIS VON POLYISOCYANAT UND WASSERGLAS, SIE ENTHALTENDE VERBUNDWERKSTOFFE UND HERSTELLUNGSVERFAHREN DAFÜR
POLYISOCYANATE ET RÉSINES HYBRIDES À BASE DE VERRE SOLUBLE, COMPOSITES CONTENANT CES PRODUITS ET PROCÉDÉ DE FABRICATION DE CEUX-CI

(30) Priority: 06.08.2004 HU 0401557
(43) Date of publication of application: 06.06.2007
(73) Proprietor: Polinvent KFT., Irhás köz 9. 1112 Budapest (HU)
(72) Inventor: KARGER-KOCSIS, Jozsefné, H-1025 Budapest (HU); NAGY, Gábor, H-1112 Budapest (HU); VILIMI, Lászloné, H-3700 Kazincbarcika (HU)
(74) Representative: Baranyi, Eva
(86) International application number: PCT/HU2005/000086
(87) International publication number: WO 2006/013400

(56) References cited:
- WO-A-82/00034
- US-A- 4 331 578
- US-A- 5 622 999

## Description

### Field of the invention

The object of the invention is a new hybrid resin containing polyisocyanate and/or blocked polyisocyanate, water glass and organic phosphoric acid ester and/or another polymer plasticizer, having improved mechanical and fracture mechanical properties, which contains vinyl ester and/or polyester as resin component. The invention also relates to a liquid system comprising two or more components for the preparation of the hybrid resin, a composite produced using such hybrid resin and the processes for producing the hybrid resin and the composite.

### Background of the invention

The resin according to the invention belongs to the family of the complicated copolymers containing polyisocyanate/water glass, which has been constantly growing ever since the late 1970s. These copolymers have several advantages over the usual organic copolymers, firstly because of the crosslinking reaction producing them may also take place in aqueous medium, secondly these products are significantly more flame retardant than the similar polymers not containing silicic acid derivatives. The reproducible preparing of these crosslinked polymers however raises some difficulties. The other problem is that the size of the polysilicic acid/polysilicate particles dispersed in the matrix varies in a wide range (20 to 200 µm); therefore the structure of the polymer is inhomogeneous. As it is known, the smaller the main particle size of the filler material of these filled polymers and the finer their distribution, the better physical-mechanical properties these polymers have. The result of dispersing water glass in polyisocyanates is an unstable, reactive water-in-oil type emulsion. Polyisocyanates with water form polycarbamid type groups. During the reaction carbon dioxide is formed and reacts with the alkali content of the water glass (aqueous solution of alkali-silicates), producing polysilicates, as a result of which the water glass 'gelates'. The water glass drops form gel balls, which take place finely dispersing in the continuous organic matrix. As times goes on (in days, weeks) these lose water and form solid xerogel balls, while ring-shaped holes generate between the walls of the matrix and the surface of the xerogel balls [see Oertel, G., Polyurethane, Kunststoff Handbuch, 7, 34 (1993) Hanser, München]. Since the reaction of forming polycarbamid is hardly influenceable, repeating the production of the product mentioned above raises difficulties, forming of the product finishes quickly, in higher amount the system may reach 100°C, and the water vapor may cause uncontrollable foaming.

Therefore the research of polyisocyanate/water glass based systems has mainly focused on controlling the reaction speed, to improve the mechanical properties and to reducing the size of the dispersed polysilicic acid/polysilicate particles.

Patents HU 212 033 and US 5 622 999 disclose a process to control the reaction speed in water-in-oil type emulsion of water glass/polyisocyanate using certain phosphoric acid esters. According to the mentioned documents the used aliphatic and aromatic organic phosphates serve not only as softener but also as interfacial catalysts (co-catalysts). The produced resins have been named 3P resin by their inventors from the initials of the English name of the three components (polysilicic acid, polyisocyanate, phosphoric acid ester). By the methods explained in these documents it is possible to appropriately control the reaction time between a few seconds and a few hours, also to significantly reduce the size of the formed polysilicic acid/polysilicate particles, but the diameter of the xerogel balls still varies in too wide a range, between 5 to 50 µm. A further disadvantage of the product is that a part of the phosphoric acid esters used during the process may disengage from the obtained resin, damaging the environment.

International Patent Application WO 13/016370 relates to the production of polysilicic acid/polyurethane nanocomposites by reacting polysilicic acid with polyisocyanate by adding appropriate polyols. The main idea of the aforementioned patent application is to create compatibility between the hydrophilic polysilicic acid and the hydrophobic organic components with the use of hydrophilic polyols. The size of the drops in w/o emulsion is meant to be reduced with different emulgators capable of modifying the interfacial tension. The additives that reduce the size of the drops and increase their stability however significantly influence the polyisocyanate/polyisocyanurate transformation (trimerisation) and the water/polyisocyanate (polycarbamide formation) reactions, the reactions may become uncontrollable.

The aim of the invention is therefore to provide a process and a product where the water glass/polyisocyanate reaction is controllable and the product has improved physical-mechanical properties as a result of the significant reduction of the size of the polysilicic acid/polysilicate particles. With the use of blocked polyisocyanates the work health and environment protection problems can also be significantly reduced.

### Brief description of the invention

We have recognized that by adding crosslinking vinyl ester and/or polyester resin to water glass and polyisocyanate (and to the usual additives of these systems), i.e. to 3P resin crosslinked hybrid resin is formed (that is a crosslinked product which consists of polysilicate particles in a hybrid polymer matrix of polyisocyanate, vinyl ester and/or polyester) with improved mechanical properties, in which the size of the majority of the polysilicic acid/polysilicate particles is smaller than 10µm. The invention is based on this surprising recognition.

The aforementioned finding is surprising because vinyl ester resins are not compatible with water glass, they don't form a homogeneous and transparent solution. Also surprising is that reducing the size of the particles isn't obtained in the known way of adding surfactants but by adding vinyl ester and/or polyester resin.

It was also unexpected that the copolymerization of vinyl ester and/or polyester resin with unsaturated monomers and the parallel reaction between water and polyisocyanate don't affect each other significantly.

It is a fact though that the alkalinity of the water glass component accelerates the decomposition of the peroxide initiators and this has to be taken into consideration when selecting the composition and the amount of the initiator system. The amine compounds resulting from the forming of polycarbamide usually activate the radical copolymerization of vinyl ester resins. This acceleration is negligible as compared to the acceleration due to the water glass according to our experience.

### Detailed description of the invention

The object of the invention is a liquid resin mixture for the preparation of a hybrid resin with improved mechanical properties, comprising two or more components consisting, after homogenisation, of water glass, polyisocyanate and/or blocked isocyanate, organic phosphoric acid ester and/or other plasticizers, and optionally the usual additives of these systems, which is characterized in that it further contains vinyl ester and/or polyester resin which crosslinks with unsaturated monomers. This liquid resin mixture is sometimes called "starting hybrid resin" in the present description.

A further object of the invention is a crosslinked hybrid resin obtained after the reaction of the above components which consists of a hybrid polymer matrix obtained by the linking on the one side of the reaction products of the polyaddition of polyisocyanate and/or partly or totally deblocked polyisocyanate molecules (in case of blocked polyisocyanate) and on the other side of the reaction products of the radical polymerisation of vinyl ester and/or polyester molecules, wherein the matrix contains finely dispersed polysilicate particles therein.

The inventions also relates to a process for producing such hybrid resins, to composites formed with such hybrid resins and to the production thereof.

The hybrid resin - as also the starting hybrid resin - according to the invention contains advantageously 5 to 90, more advantageously 10 to 75 parts of vinyl ester and/or polyester resin.

According to the invention vinyl ester resin means ester type compound containing one or more carbon-carbon double bond obtained from the reaction of hydroxyl compounds or the precursors thereof, advantageously epoxy compounds with carboxylic acids, advantageously unsaturated mono carboxylic acids. This vinyl ester resin can be crosslinked by radical copolymerization with unsaturated monomers, containing at least one carbon-carbon double bond. From the epoxy compounds used as a component the following examples can be mentioned: bisphenol-A-diglycidylethers, bisphenol-F-diglycidylethers, tetrabromo-bisphenol- diglycidyiethers, other diglycidylethers, cycloaliphatic epoxy resins, epoxidized vegetable oils and epoxy novolacs. From the mono carboxylic acids reacting with the epoxy compounds we may mention the following ones as examples: acrylic acid, methacrylic acid, crotonic acid and cinnamic acid. The hybrid resin according to the invention may also contain modified vinyl ester resins, for example the ones containing urethane bonds. Vinyl ester resin may also be obtained by the addition reaction of aromatic dicarboxylic acids, tricarboxylic acids and epoxypropylmetylacrylate [see also Brian Craig: thesis, Virginia Polytechnic Institute and State University, USA (2001)], the hybrid resin according to the invention may also contain these vinyl esters.

In the hybrid resin according to the invention bisphenol-A- based vinyl ester resin, novolac based vinyl ester resin, epoxidized soya oil based vinyl ester resin are advantageous as vinyl esters. Vinyl ester mixtures, for example the mixture of a bisphenol-A based vinyl ester and a novolac based vinyl ester or the mixture of a bisphenol-A based vinyl ester and an epoxidized soya oil based vinyl ester are also advantageously used..

From the polyester resins suitable for the manufacture of the hybrid resin according to the invention mainly the polyester types disclosed in Hungarian patent 208332 can be taken into consideration, the acid number of which is preferably smaller than 40 mg KOH/g. These polyesters are obtained by the polycondensation of dicarboxylic acids such as isophthalic acid, maleic anhydride, fumaric acid, phthalic anhydride, adipic acid, sebacic acid, etc. and dialcohols, like ethylene glycol, 1,2- propylene glycol, diethyleneglycol, dipropyleneglycol, neopentylglycol, etc.

Apart from these any polyester resin is appropriate according to the invention, which has been developed for PE-PUR (polyester-polyurethane) hybrid resins by the different manufacturers. From these we mention as examples the isophthalic acid, and terephthalic acid based polyesters sold under the name Viapal by Vianova. The mixture of vinyl ester and polyester is also advantageously used in the hybrid resin according to the invention. Advantageous is for example the mixture of a modified vinyl ester containing urethane bonds and an isophthalic acid based polyester resin.

Crosslinking of vinyl ester and/or polyester resin is a result of radical copolymerisation. For this - amongst others - one or more following monomers containing one or more unsaturated bonds may be used: styrene, divinylbenzene, methacrylates, such as tetrahydrofurfuryl-methacrylate, n-hexylmethacrylate, 2-ethylhexylmethacrylate, isodecylmethacrylate, cyclohexylmethacrylate, benzylmethacrylate, hydroxyethylmethacrylate, hydroxypropylmethacrylate, diethyleneglycol-dimethacrylate, butanediol-dimethacrylate, polyethylene glycol- dimethacrylate, trimethylpropane-trimethacrylate, N-vinyl-pyrrolidone, ethyl-cinnamate, dibutyl-maleate, triallyl-cyanurate, triallyl-isocyanurate, benzylidene-acetone, benzylidene-acetophenone, diethylfumarate, etc.

These monomers are also capable of solving the mostly solid vinyl ester or polyester basic resin so that they can be commercialized as solutions. These solutions usually contain 50 to 80 % by weight of vinyl ester and/or polyester basic resin and can be well used for the preparation of the hybrid resin according to the invention. The hybrid resin according to the invention contains advantageously 2 to 45 parts of such monomer. In the liquid resin mixture according to the invention the component containing vinyl ester and/or polyester in solution in the unsaturated monomer compound is also called Component A1.

Since the vinyl ester and/or polyester resin is capable of self-polymerisation e.g. on the effect of heat, light, etc., the compound containing one or more unsaturated bond, used for crosslinking the vinyl ester and/or polyester resin may optionally be omitted.

VE-PUR or PE-PUR hybrid systems containing vinyl ester(VE) and/or polyester (PE), styrene and polyisocyanate are already known, for example patent application EP 0 448 167 discloses the preparation and use of such a system.

As starting compound for the polyisocyanate component according to the invention for example the following compounds and the mixtures thereof may be used:

The most important isocyanate family is the methylenediphenyl-isocyanate (MDI) family which is also the most important basic component of polyurethane (PUR) manufacturing. The so-called monomer MDIs belong to the MDIs, these contain two aromatic rings, such as the pure 4,4'-MDI, the mixtures of 4,4'-MDI and 2,4'-MDI are like that, so are the more complicated isomer and oligomer mixtures, for example the members of the crude MDI (CR-MDI) series, the viscosity of the ones available in commerce being approximately between 150 mPas and 3000 mPas. The members of the group with higher viscosity have a greater ratio of oligomer MDI with three or more rings, these are also known as polymer MDI (P-MDI). The use of P-MDI types is particularly advantageous for the hybrid resins according to the invention, but they are also advantageously used for 3P resins. The next group of MDIs which may be used according to the invention is the group of MDI pre-polymers, like the diisocyanates formed by the reaction of MDI and polyether- and/or polyester-polyols, where one MDI molecule reacts with each of the hydroxyl groups at the end of the chain. By changing the length of the chain and the chemical properties of the starting polyol - similarly to the PUR products and the 3P resins - the properties of the hybrid resins according to the invention can also be controlled. By using polyols with longer chains (Mₙ≥1500) the flexibility and the ductility of the product can be improved.

For the hybrid resins according to the invention the so-called modified MDIs can also be used, in these a part (e.g. 5 to 25%) of the monomer or oligomer molecules are transformed. MDIs containing carbodiimide, urethdion and urethonimine bonds and MDIs partially joint to polyisocyanurate rings by trimerization (PIR-MDI) can also be used, with the latter particularly heat and chemical resistant products can be produced.

A further group of the isocyanates which may be used according to the invention is the group of the so-called blocked (protected) isocyanates, where the reactive isocyanate groups are temporarily protected. In pure state, or in water glass free systems over 100 to 120°C, so at relatively high temperature the protective groups split off, liberating the isocyanate groups. Several such products are available in commerce, in these isocyanate is protected for example with caprolactam, dimethyl-pyrazole, diethyl-malonate, etc.

Isocyanates protected with the blocking agents disclosed in Hungarian patent application P0401799 can be advantageously used as blocked isocyanates. According to the invention particularly advantageous are the isocyanates protected with unsaturated blocking agents, for example aceto-acetic acid-ethylene glycol- acrylate or -metacrylate, mesityloxideoxime, etc, since the unsaturated compounds splitting off from these partially build into the hybrid resin. In smaller amount isocyanate blocked with saturated compounds can also be used, where the leaving compound - similarly to the part remaining from unsaturated compounds - behaves like plasticizer.

With the use of such blocked isocyanates according to the invention hybrid resins can be formed which in case of low water glass content and with the right blocking agent are stable for a longer period of time (at least several hours) then react slowly at room temperature. In case of systems containing water glass in higher concentration though the deblocking may be finished in 10 to 60 minutes even at room temperature. This finding, i.e. that in the presence of water glass blocked isocyanate can be deblocked even at room temperature greatly widens the circle of blocked isocyanates that can be used according to the invention.

Apart from the MDI family pre-polymers , modified and blocked derivatives made of toluylene-diisocyanate (TDI) can also be advantageously used.

For the hybrid resin according to the invention isocyanate mixtures are advantageously used, for example the mixture of polymethylene-polyphenyl-isocyanate, MDI and its polycyclic oligomers, and an MDI and polyether diol based prepolymer, or blocked isocyanate mixture, for example the mixture of MDI blocked with mesityloxy-oxim, MDI blocked with aceto-acetic acid-ethyleneglycol-methacrylate and polyether diol based prepolymers. The mixture of blocked and non-blocked isocyanate is advantageously used, for example the mixture of polymethylene-polyphenyl-isocyanate, MDI and its polycyclic oligomers, MDI partially blocked with aceto-acetic acid-ethyleneglycol-acrylate and MDI prepolymer blocked with aceto-acetic acid-ethyleneglycol-methacrylate. Also advantageous is the mixture of polymethylene-polyphenyl-isocyanate, MDI and its polycyclic oligomers and two types of blocked isocyanates, for example MDI blocked with mesityloxy-oxim and MDI blocked with aceto-acetic acid-ethyleneglycol-methacrylate.

The hybrid resin according to the invention contains advantageously 2.5 to 65 parts, even more advantageously 10 to 55 parts of polyisocyanate and/or blocked isocyanate.

According to the invention advantageously the aqueous solution or the mixture thereof of different lithium-, sodium- and potassium-water glasses are used as water glass. The modulus of the alkali water glasses (M=SiO₂ / Na₂O) is between 1.8 and 2.9 and the viscosity at room temperature (η₂₂°C) is approximately between 50 mPas and 1500 mPas, advantageously between 400 mPas and 800 mPas. The hybrid resin according to the invention contains advantageously 2.5 to 45 parts, even more advantageously 8 to 35 parts of water glass. In the liquid resin mixture according to the invention the component containing water glass is also called Component A2.

Different additives are also used for the hybrid resin according to the invention.

To these additives belong the inorganic and organic percompounds generally used to initialize the radical crosslinking reaction of vinyl-ester resins, such as peroxides, organic azo- and azine-compounds and similar compounds. From the organic peroxides for example tert-butyl-peroxy-pivalate, lauryl-peroxide, dibenzoyl-peroxide, tert-butyl-peroxyisobutyrate, tert-butyl-perbenzoate, dicumile-peroxide, methyl-ethyl-ketone-peroxide and similar compounds are advantageous. The inorganic percompounds are soluble in water glass, therefore these initiators can be added to the water glass component. From these sodium and potassium persulphate, sodium perborate, hydrogen peroxide, etc. can be advantageously used. According to the invention the combination of more than one radical initiator can also be used. Advantageously 0.002 to 2 parts of initiator is used for the hybrid resin according to the invention.

As activators for the radical copolymerisation the known amine compounds can be used, from which we mention N,N-diethyl- aniline, N,N-diethly-acetoacetamide and N,N-dimethylamino-metacrylate as examples.

Fluid water glasses can also contain further additives, such are for example the polyhydric alcohols, which are soluble in water glass, for example ethylene-glycol, glycerol, etc, certain surface active agents, for example quaternary amriionium-hydroxides, coloring agents and/or pigments, thixotropizing agents, the usual fibre or granular fillers.

The most important additives to the so-called component "B", which contains the isocyanate are the co-catalysts that are active on the interface, to these belong first of all
the phosphoric acid esters, from which the compounds in the already mentioned patent HU 201 033 can be used advantageously, particularly advantageous are for example trimethyl-, triethyl-, tributyl-, trioctyl-, triphenyl-, tritolyl-phosphate or the mixtures thereof,
the tertiary-amines, dialkyl acid amides, alkylimines, etc,
diesters, diethers or ether-esters of oligomer ether-alcohols, for example tripropylene glycol-butylether-acetate, etc, monomers with high boiling temperature and flammability point (Flp≥100°C), such as benzylidene acetone, benzylidene acetophenone, ethyl cinnamate, diethyl fumarate, triallyl cyanaurate etc. The hybrid resin according to the invention contains advantageously 5 to 35 parts of organic phosphoric acid ester and/or other plasticizer.

In component "B" optionally surface active agents may be used, from which non-ionic surfactants are advantageous. Advantageously at most 5 parts, particularly advantageously at most 1 part of surfactant is used.

According to the invention Henkel's Perenol F40 product is advantageous.

Further additives are the filler and reinforcer materials of the composites formed with the use of the hybrid resin according to the invention, such as mineral grinds, like broken basalt or andesite, barite, talc, titanium-dioxide, graphite powder, industrial carbon black, glass-fiber rope (glass thread), fiberglass chopped strand mat, glass mat (matte), glass fabric, carbon fibre, carbon fibre fabric, Kevlar® fabric, basalt fibre fabric, etc.

According to the invention a hybrid is resin is also advantageous if it contains all components mentioned above in the amount specified as advantageous.

The hybrid resin according to the invention may contain further usual additives, such as pigments, coloring agent, etc.

The invention also relates to the process of producing the hybrid resin according to the invention. The process is carried out by mixing the components of the liquid system of two or more components containing the additives in arbitrary order. Advantageously first the vinyl ester and/or polyester resin and the water glass components (components A1 and A2) are mixed, then the component containing the isocyanate and/or blocked isocyanate (component B) is added to the obtained milk-like liquid, is homogenized with it, then the product is left to cure. In certain cases wherein component B contains only blocked isocyanate, component A1 and B may also be mixed first. An advantageous process according to the invention is when to obtain 100 parts the followings are mixed in the necessary amount: 5 to 75 parts of one or more vinyl ester and/or polyester basic resin, 2 to 45 parts of one or more unsaturated monomers which form crosslinked copolymer with the vinyl ester and/or polyester basic resin, 2.5 to 45 parts of water glass, 2.5 to 65 parts of one or more polyisocyanates and/or blocked polyisocyanates, 0.25 to 34 parts of one or more organic phosphoric acid esters and/or other plasticizer with high flammability point, 0.02 to 2 parts of one or more radical initiators and if desired one or more usual additives, and the homogeneous mixture is left to cure.

The obtained reactive resin can be applied until not cured, i.e. a period of time defined in advance, in situ between approximately 2 to 120 minutes depending on the composition. In case of use of blocked isocyanate and vinyl ester this period may be even longer.

This liquid resin mixture as a system of one component can be injected, can be spread, applied onto the surface of structures as corrosion preventive coating, or mixed with particulate fillers can be used as "plastic concrete", mold as plastic mortar, or composites can be produced from it with reinforcements by laminating, impregnating, etc.

The composites can be produced in a known matter, for example by mixing the still not cured resin with fillers and/or reinforcements, or impregnating in case of fabric. The impregnating can be done in a known matter, for example by hand, in this case the resin is poured onto one side of the fabric, spread, and introduced amongst the fibres by tapping, then the fabric is turned to its other side and this operation is repeated. If desired multiple layer composites can be produced by putting several impregnated glass fabrics onto each other and squeezing the air out from amongst the fibres. The finished sheet is allowed to stand at room temperature then heat-treated.

The hybrid resins according to the invention have the following advantages over the vinyl ester, polyester and 3P resins, which form their base:
- have better mechanical and fracture mechanical properties than the known water glass/polyisocyanate based systems;
- both the vinyl ester and the 3P resins have particularly good chemical resistance; these properties remain or improve with an even wider range of compounds in case of hybrid resins;
- the new crosslinked PE-polyisocyanate hybrid resins have significantly better chemical resistance than the crosslinked starting PE or PE-PUR hybrid resins;
- the flame resistance of hybrid resins can be further improved by using halogenated, for example brominated vinyl ester and/or polyester resin derivates;
- to impregnate reinforcements hybrid resins with low viscosity can be produced by using vinyl ester and/or polyester resin diluted with monomers;
- the hybrid resin can be produced at 5-10°C lower temperature than needed to produce the usual vinyl ester and/or polyester resins (similarly to 3P resins, because of the highly alkali water glass and the highly reactive isocyanate groups), what is particularly advantageous in case of outside use.

Now we will illustrate the invention with examples, it is not intended though to restrict the scope of claims with them.

The following abbreviations will be used for the starting compounds in the examples:
Polyisocyanates (products of BorsodChem Rt. [Kazincbarcika, Hungary]):
   P-MDI₁: Ongronat CR 30-40, the mixture of polymethylene-polyphenyl-isocyanate, 4,4'-diphenyl-methane-diisocyanate (MDI) and of its polycyclic oligomers having greater functionality, its viscosity on 20°C is approximately 400 mPas.
   P-MDI₂: Ongronat CR HV, its viscosity on 20°C is approximately 1500 mPas.
   MDI-prep: Ongronat PA 08, 4,4'-diphenyl-methane-diisocyanate and polyether-diol based prepolymer, its viscosity on 20°C is approximately 3000 to 3500 mPas.
   Blocked polyisocyanates (Experimental products of Polinvent, see tables 3 and 4):
      BI₁ = MDI 44/50, half blocked with AAEA- (B01)
         AAEA= aceto-acetic acid-ethyleneglycol-acrylate
      BI₂ = MDI 44 blocked with MEOO (B6)
         MEOO= mesityloxy-oxime ,
      BP₁ = MDI Prep., blocked with AAEMA (B3)
         AAEMA= aceto-acetic acid-ethyleneglycol-methacrylate
      (B01, B6 and B3 are the labelling in patent application HUP0401799)

Water glass: Betol 3P, Woellner Werke (Ludwigshafen, Germany), its viscosity on 20°C is approximately 600 mPas, its modulus is 2.

### Vinyl ester resins:

From the products of DSM Composite Resins, Zwolle (The Netherlands):
VE(B₁): Atlac 580 Standard, bisphenol-A-vinyl-ester resin in solution in styrene, its viscosity on 23°C is approximately 400 to 500 mPas.
VE(B₂): Atlac 580 HV
VE(N): Atlac 590 HV, novolac based vinyl-ester resin in solution in styrene

From the products of Reichhold (North Carolina, USA):
VE (B₃): Dion^{®} 9800, modified vinyl ester resin containing urethane bonds and the:
VE(SO): epoxidized soya oil based vinyl ester resin which has been produced by us according to the slightly modified method of USP 4 224 369" its production is described in the Examples.

### Polyester resins:

PE (V): Viapal VUP 4812 B/60 (Vianova) special, isophthalic acid based polyester, preferably without amine accelerator,
PE (H): Urepol 20 (Nitrokémia) special, isophthalic acid based polyester, preferably without amine accelerator.

### Interfacially active catalysts:

TBP: tributyl-phosphate
TPP: triphenyl-phosphate
TTP: tritolyl-phosphate, all three are the product of Bayer AG, Germany
PL : Mixture of TPP and TBP type plasticizers in a ratio of 1:2

### Initiator:

BPO: dibenzoyl-peroxide, Lucidol CH 50 L, product of Akzo Nobel, its active peroxide content is 50%.

The hybrid resins according to the examples are produced by the use of the following components: Component A1 is the vinyl ester and/or polyester resin or resin combination in solution in unsaturated monomers, component A2 is the water glass and component B is the mixture containing the MDI or MDI combination and/or blocked isocyanates and the phosphoric acid ester(s) and/or other plasticizer(s). The organic peroxide initiator can be added to either component A1 or B.

In the examples first of all the organic initiator is added to component A1, then component A2 is also added and the mixture is stirred at approximately 800 to 1000 RPM for approximately 2 minutes. Component B is added to the obtained milk-like fluid and homogenized for one minute.

To determine the mechanical properties of the obtained product, to examine the crosslinked resins the recently often used linear elastic/fracture mechanical properties have been measured, these are: the critical stress intensity factor or fracture toughness (Kc) and the critical strain energy release rate or fracture energy (Gc). The Kc value is the function of the tension (proportional with the force load), the Gc value is the function of the energy (so that in case of nearly identical Kc values Gc's increment means the improvement of the ductility of the material).

To determine the Kc and Gc values the method of the ÉSIS TC-4 work group have been used, disclosed in the following document: J. G. Williams: Kc and Gc at low speeds for polymers in "Fracture Mechanics Testing Methods for Polymer Adhesives and Composites - ÉSIS Publ. 28", Eds: D. R. Moore, A. Pavan and J. G. Williams, Elsevier, Oxford, 2001, pp. 11-26. The measurements have been made on notched compact tension specimen (CT). These have been obtained by pouring the starting hybrid resin in an open PTFE tool, then by curing. The test pieces have been allowed to stand for 24 hours at room temperature after their production then heat treated for 8 hours at 100°C.

### Examples

### Production of the starting compound

Vinyl ester resin is prepared from epoxidized soya oil as follows. A mixture of 320g (1.28 moles) of epoxidized soya oil (product of Crompton Vinyl Additives GbmH) and 0.86g of inhibitor is heated to 100°C with air flow and stirring and refluxing. Then the mixture of 110.5g (1.28 moles) of methacrylic acid and 1.1g (0.26 mol%) of catalyst is added in 2 to 3 parts in approximately 10 minutes. The reaction mixture is stirred for 6 to 8 hours at 120°C with refluxing. To monitor the progress of the reaction a sample is taken in every hour, from which the acid number is determined. When the acid number of the compound drops below 50 mg/KOH g, the mixture is cooled to 50°C and an aqueous solution containing approximately 1 % of NaCI is added, which is 20% of the volume of the reaction mixture, the mixture is stirred for 1 to 2 minutes, then let settle. This operation is repeated until the pH of the aqueous solution is near neutral. The water traces are removed with vacuum distillation. The acid number and epoxy equivalent value of the final product is measured.

### Examples 1 to 14

The quantity in parts by weight and the obtained fracture mechanical data of the starting materials used in the Examples according to the invention have been summarized in Table 1. We have paid attention to that the P-MDI/water glass/phosphoric acid ester ratio is the same in the Examples. In each case 1.5 parts of initiator have been given for 100 parts of vinyl ester (this is why the hybrid resins and the vinyl ester resins together don't make 100 parts).

### Examples 15 to 21 (comparative)

To make a comparison a pure vinyl ester, a hybrid resin made of it and isocyanate and a pure 3P resin have been examined. The data of the comparative examples (CE) can also be found in table 1.

**TABLE 1**

| Example number | VE(B₁) | VE(B₂) | VE(N) | VE(SO) | BPO | P-MDI₁ | P-MDI₂ | MDI-Prep. | Na-water | TBP | TPP | TTP | Kc (MPa/m) | Gc (kJ/m²) |
|---|---|---|---|---|---|---|---|---|---|---|---|---|---|---|
| 1 | --- | --- | 25,00 | --- | 0,38 | 31,50 | --- | --- | 30,00 | 9,00 | 4,50 | - | 1,50 | 1,85 |
| 2 | --- | --- | 75,00 | --- | 1,13 | 10,50 | --- | --- | 10,00 | 3,00 | 1,50 | - | 1,30 | 0,95 |
| 3 | 10,00 | --- | --- | --- | 0,15 | 37,80 | --- | --- | 36,00 | 10,80 | 5,40 | - | 1,15 | 1,60 |
| 4 | 90,00 | --- | --- | --- | 1,35 | 4,20 | --- | --- | 4,0 | 1,20 | 0,60 | - | 1,10 | 0,70 |
| 5 | 25,00 | --- | 25,00 | --- | 0,75 | 21,00 | --- | --- | 20,0 | 6,00 | 3,00 | - | 1,35 | 1,40 |
| 6 | 21,00 | --- | --- | --- | 0,32 | 26,00 | --- | 17,0 | 25,0 | 7,30 | 3,70 | - | 1,25 | 3,50 |
| 7 | 62,50 | --- | --- | --- | 1,13 | 8,70 | --- | 16,70 | 8,40 | 2,50 | 1,20 | - | 1,40 | 1,15 |
| 8 | --- | 10,0 | --- | --- | 0,15 | 37,80 | --- | --- | 36,00 | 10,8 | - | 5,40 | 1,15 | 1,90 |
| 9 | --- | 90,0 | --- | --- | 1,35 | 4,20 | --- | --- | 4,00 | 1,2 | - | 0,60 | 1,10 | 1,05 |
| 10 | --- | 15,0 | --- | 10,0 | 0,38 | 31,50 | --- | --- | 30,00 | 9,0 | - | 4,50 | 1,50 | 1,65 |
| 11 | --- | 50,0 | --- | 25,0 | 1,13 | 10,50 | --- | --- | 10,00 | 3,0 | - | 1,50 | 1,30 | 1,75 |
| 12 | --- | 40,0 | --- | 10,0 | 0,75 | 21,0 | --- | --- | 20,00 | 6,0 | - | 3,00 | 1,35 | 1,50 |
| 13 | --- | 25,0 | --- | --- | 0,38 | 21,50, | 10,0 | --- | 30,00 | 9,0 | - | 4,50 | 1,25 | 2,50 |
| 14 | --- | 75,0 | --- | --- | 1,13 | 5,50 | 5,0 | --- | 10,00 | 3,0 | - | 1,50 | 1,40 | 1,40 |

| CE. number | VE(B₁) | VE(B₂) | VE(N) | VE(SO) | BPO | P-MDI₁ | P-MDI₂ | MDI-Prep. | Na-water | TBP | TPP | TTP | Kc (MPa/m) | Gc (kJ/m²) |
|---|---|---|---|---|---|---|---|---|---|---|---|---|---|---|
| 15 | --- | --- | --- | --- | --- | 42,0 | --- | --- | 40,0 | 12,0 | 6,0 | --- | 1,10 | 1,50 |
| 16 | --- | --- | --- | --- | --- | 21,0 | 21,0 | --- | 40,0 | 12,0 | --- | 6,0 | 1,20 | 1,40 |
| 17 | 100,0 | --- | --- | --- | 1,50 | 35,0 | --- | --- | --- | --- | --- | --- | 1,05 | 0,80 |
| 18 | 100,0 | --- | --- | --- | 1,50 | --- | --- | --- | --- | --- | --- | --- | 1,00 | 0,60 |
| 19 | --- | --- | 100,0 | --- | 1,50 | --- | --- | --- | --- | --- | --- | --- | 1,05 | 0,50 |
| 20 | --- | 100,0 | --- | --- | 1,50 | --- | --- | --- | --- | --- | --- | --- | 1,00 | 0,65 |
| 21 | --- | 50,0 | --- | 50,0 | 1,50 | --- | --- | --- | --- | --- | --- | --- | 1,05 | 0,70 |

The results show that the hybrid resin according to the invention has better fracture mechanical properties than it could be expected from adding the mechanical properties of the components that form it according to their ratio of concentration. For example if we compare the fracture mechanical results of examples 1 and 2 to that of Comparative Examples 15 and 19 consisting only of 3P resin respectively of vinyl ester resin, or to that of Comparative Example 17, which consists of vinyl ester - isocyanate hybrid resin, it is clear that as a result of mixing the two components the fracture mechanical properties of the hybrid resin according to the invention improve surprisingly. The Gc values are particularly interesting. Based on the low Gc values of the examined pure vinyl ester resins (below 1.0) it would have been expected that the Gc values of the hybrid resins according to the invention would be lower than that of the 3P resins. On the contrary, the Gc values increase up to 50 parts of vinyl ester, and even over that they don't decrease as expected. Similarly all the hybrid resins according to the invention have better mechanical properties than the comparable resins.

It's also apparent that the use of combinations of vinyl ester resins also produces good results.

### Example 22

Example 10 is repeated except that 0.5 % by weight of Perenol F40 is added to the water glass component as surface active agent. The obtained results are Kc=1.4 and Gc=3.3. That means the mechanical properties, particularly the Gc value is better than in Comparative Examples 15 or 21, but we have been unable to demonstrate further decrease of the main particle size resulting from the presence of the surface active agent.

### Examples 23 to 31

Table 2 contains the composition in parts by weight and the mechanical properties of further hybrid systems of different formulations made of two different PE resins and blocked isocyanates.

(Comparative) Examples 23 and 24 demonstrate a resin made of polyester with isocyanate, Examples 25 to 27 show the production of the hybrid resin containing polyester according to the invention.

It can be observed that also the PE-3P type hybrid resins containing water glass have significantly better mechanical properties than the PE-PUR hybrid resins.

In Examples 28 to 31 the test pieces are produced with the use of blocked isocyanates. It can be seen that also these systems containing water glass have better fracture mechanical values than the comparative formulations, which means the system also works well with blocked isocyanates, the deblocking is achieved in a short time with good efficiency. The information about the production of the blocked experimental products can be found in tables 3 and 4. (The blocking reactions themselves are well known, plus are disclosed in Hungarian patent application P0401799)

Scanning electron microscopic (SEM) photos have been used to determine the physical structure of the product and the size of the polysilicic acid/polysilicate particles. The photos have been taken of the fracture surface of the CT test pieces after the usual preparation (coating with gold to avoid static charge).
Figure I shows a photo of the fracture surface of the test piece made of 3P resin in 200x magnification;
Figure 2 is the same but in 2000x magnification;
Figure 3 shows the fracture surface of the test piece produced according to Example 5 in 5000x magnification.

By comparing figures 1 and 2 (relating to the 3P resin) to figure 3 (relating to the hybrid resin according to the invention produced in Example 5) it can be seen that the size of the polysilicic acid/polysilicate particles in the hybrid resin according to the invention has decreased in comparison with that of the 3P resin. This means that the improvement of the fracture mechanical values can be correlated to the finer particle size distribution.

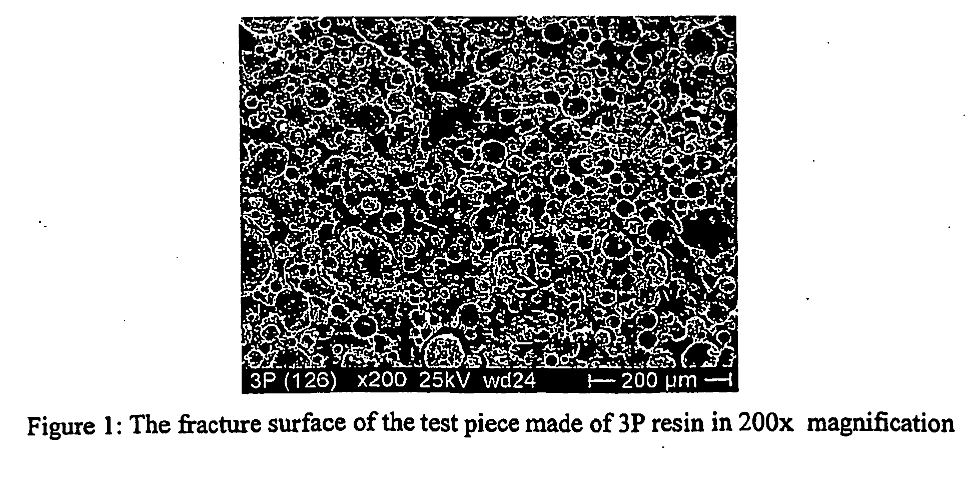

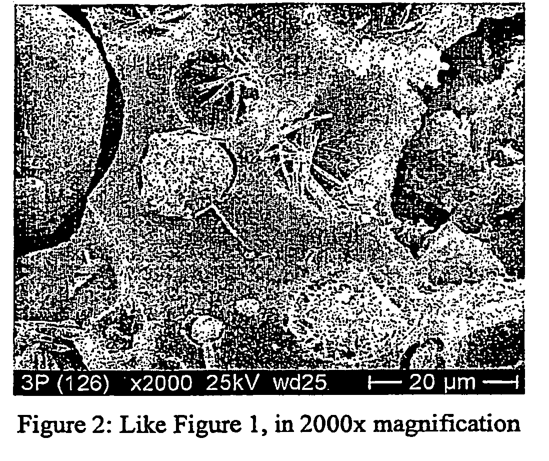

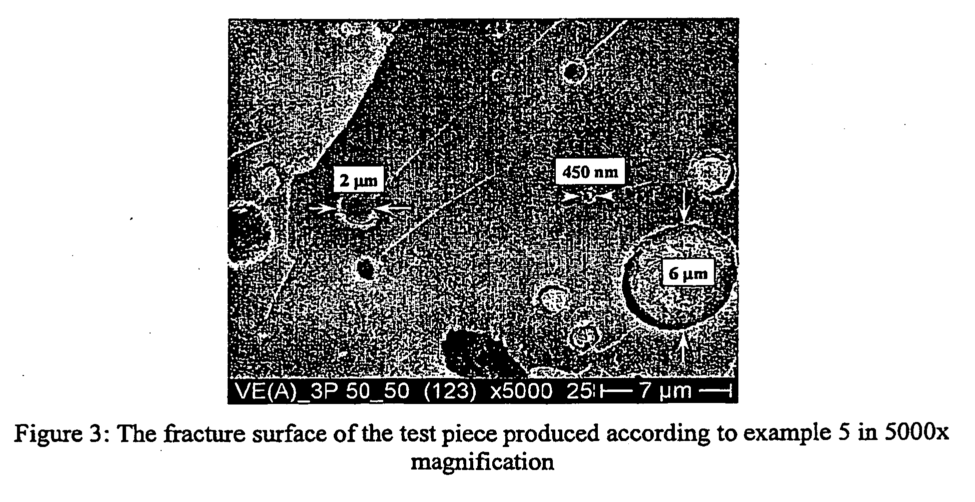

The three main components necessary to produce the hybrid resin according to the invention can be stored for a long time, or transported in case of outside production if they are prepared appropriately. The invention also relates to such a kit. Therefore the further object of the invention is a kit for storing and transporting the 3 basic components of the staring hybrid resin, which consists of vinyl ester and/or polyester resin in solution in unsaturated monomer as component A1, water glass and optionally radical initiator and other additives soluble in water glass as component A2, polyisocyanate and/or blocked isocyanates, organic phosphoric acid ester and/or other plasticizer-like material(s) and optionally one or more organic free radical initiators and other additives as component B. In another variant, the kit consists of only two components, as component A1 containing vinyl ester and/or polyester and component B containing isocyanate in blocked form are mixed.

**TABLE2**

| Example number | COMPOSITION (WEIGHT PERCENT) | | | | | | | | | | FRACTURE MECHANICAL PROPERTIES | |
|---|---|---|---|---|---|---|---|---|---|---|---|---|
| | VE (B₃) | PE(V) | PE (H) | BPO | P-MDI₁ | BI_{I} | BI₂ | BP₁ | Na-water glass | PL | Kc MPa/m | Gc kJ/m² |
| 15(CE) | --- | --- | --- | --- | 42 | --- | --- | --- | 40 | 18 | 1,10 | 1,50 |
| 23(CE) | --- | 80 | --- | 1,2 | 20 | --- | --- | --- | --- | --- | 1,60 | 1,00 |
| 24(CE) | --- | --- | 80 | 1,2 | 20 | --- | --- | --- | --- | --- | 1,55 | 1,15 |
| 25 | --- | 60 | --- | 1,2 | 18 | --- | --- | --- | 16 | 6 | 1,75 | 3,80 |
| 26 | --- | --- | 60 | 1,2 | 18 | --- | --- | --- | 16 | 6 | 1,70 | 3,90 |
| 27 | --- | 25 | --- | 1,05 | 31,5 | --- | --- | --- | 30 | 13,5 | 1,35 | 3,30 |
| 28 | 25 | --- | --- | 0,38 | 10 | 11,5 | --- | 10 | 30 | 13,5 | 1,25 | 2,70 |
| 29 | 75 | --- | --- | 1,13 | --- | --- | 5 | 5 | 10 | 4,5 | 1,40 | 2,90 |
| 30 | 21 | --- | --- | 0,32 | 16 | --- | 10 | 17 | 25 | 11 | 1,30 | 2,60 |
| 31 | 25 | 25 | --- | 0,75 | --- | --- | 10 | 11 | 20 | 9 | 1,40 | 3,10 |

| | | | | | | | | | | | | |
|---|---|---|---|---|---|---|---|---|---|---|---|---|
| (Examples 15,23 and 24 are comparative examples) | | | | | | | | | | | | |

**TABLE 3**

| STARTING MATERIALS | | | |
|---|---|---|---|
| Type | **η20°C-** | -NCO, % | Remark |
| Ongronat HS-44 = MDI 44 | 5/43°C | 33 | 4,4'-MDI |
| Ongronat HS-44-50 = MDI 44/50 | ~20 | 33 | Mixture of 4,4'-MDI and 2,4'-MDI (monomers) in 1:1 ratio |
| PP-1 (Ongronat PA-08) | 3300-4300 | ~8,5 | MDI based polyether prepolymer produced by reacting 1 mol of poly-propylene-glycol 2000 and 2 moles of Ongronat HS-44 |

**TABLE 4**

| BLOCKED EXPERIMENTAL PRODUCTS | | | | | | | |
|---|---|---|---|---|---|---|---|
| Blocked product | Reaction partners | | Catalyst⁺ | Plasdeizer | State of condition Å | Conversion | Remark |
| | Isocyanate | Blocking agent | [weight%] | [weight%] | On 22°C | [%] | |
| B01 | 0,5 4,4'-MDI | 0,5 AAEA | EtONa 0,3 | --- | VL. | 49 | HQMME° |
| | 0,5 2,4'-MDI | | | | | | |
| B3 | PP-1 | 2AAEMA | MeONa 0,3 | 20% ECI | P. | 98 | HQMME |
| B6 | 4,4'-MDI | 2 MEOO | EtONa 0,2 | --- | VL. | 99 | HQMME |

| | | | | | | | |
|---|---|---|---|---|---|---|---|
| ⁺ EtONa = Na-ethylate MeONa = Na-methylate ° HQMME = hidroquinon-monomethylether, inhibitor ^{Å} VL = viscous liquid, P = paste-like ECI = ethyl-cinnamate | | | | | | | |

## Claims

1. A liquid resin mixture for the preparation of a hybrid resin with improved mechanical properties, comprising two or more components consisting after homogenization of water glass, polyisocyanate and/or blocked isocyanate, organic phosphoric acid ester and/or other plasticizers, and optionally the usual additives of these systems, **characterized in that** it further contains vinyl ester and/or polyester resin which crosslinks with unsaturated monomers, wherein the polyester resin, preferably on the basis of isophthalic acid, is suitable for the preparation of polyester-polyurethane type hybrid resin.

2. The liquid resin mixture according to claim 1, which contains 5 to 90 parts per weight, advantageously 10 to 75 parts per weight of vinyl ester and/or polyester resin.

3. The liquid resin mixture according to claim 1 or 2, which contains bisphenol-Abased vinyl ester resin, novolac based vinyl ester resin, epoxidized soya oil based vinyl ester resin or the mixture thereof as vinyl ester.

4. The liquid resin mixture according to any of claims 1-3, which also contains one or more unsaturated monomer compounds, preferably styrene and one or more free radical initiators to crosslink the vinyl ester and/or polyester resin.

5. The liquid resin mixture according to any of claims 1-4, which also contains a surface active agent.

6. The liquid resin mixture according to any of claims 1-5, which contains blocked isocyanate as isocyanate.

7. The liquid resin mixture according to claim 6 wherein the blocking agent in the blocked isocyanate is an unsaturated compound suitable for radical polymerization.

8. A crosslinked hybrid resin which consists of a hybrid polymer matrix obtained by the linking on the one side of the reaction products of the poliaddition of polyisocyanate and/or partly or totally deblocked polyisocyanate molecules and on the other side of the reaction products of the radical polymerization of vinyl ester and/or polyester molecules, wherein the matrix contains finely dispersed polysilicate particles therein.

9. The hybrid resin according to claim 8 obtained after the reaction of the components of the liquid resin mixture according to any of claims 1 to 7.

10. A process to produce the hybrid resin according to claim 9 using polyisocyanates, water glass, organic phosphoric ester and/or other plasticizer and the usual additives of these systems, **characterized in that** first the component containing the water glass is mixed with the vinyl ester and/or polyester resin component, then the component containing the isocyanate and/or blocked isocyanate is added to the obtained milk-like fluid and is homogenized with it then the mixture is left to cure.

11. The process according to claim 10, **characterized in that** one or more unsaturated compounds are used for crosslinking the vinyl ester and/or polyester resin.

12. The process according to claim 10 or 11, **characterized in that** based on the total weight of the hybrid resin at most 5 %, advantageously at most 1 % of surfactant is also added to the component containing the isocyanate.

13. The process according to any of the claims 10 to 12, **characterized in that** to obtain 100 parts the following are mixed in the necessary amount: 10 to 75 parts of one or more vinyl ester and/or polyester basic resin, 2 to 45 parts of one or more unsaturated monomers which form crosslinked copolymer with the vinyl ester basic resin, 2.5 to 45 parts of water glass, 2.5 to 65 parts of one or more polyisocyanates and/ or blocked polyisocyanates, 5 to 35 parts of one or more organic phosphoric acid esters and/or other plasticizer, 0.02 to 2 parts of one or more free radical initiators and if desired one or more usual additives, and the mixture is left to cure.

14. A composite consisting of the hybrid resin according to claim 8 or 9 and known fillers, advantageously glass fabric, glass mat, glass thread.

15. A process to produce a composite, **characterized in that** filler or reinforcement is worked into the hybrid resin according to claim 8 or 9 or produced according to any of claims 11 to 14..

16. A kit for storing and transporting the components of the starting hybrid resin, which consists of vinyl ester and/or polyester resin in solution in unsaturated monomer as component A1, water glass and optionally radical initiator and other additives soluble in water glass as component A2, polyisocyanate and/or blocked isocyanates, organic phosphoric acid ester and/or other plasticizer(s) and optionally one or more organic free radical initiators and other additives as component B.

17. The kit according to claim 16 wherein component A 1 containing vinyl ester and/or polyester and component B containing isocyanate in blocked form are mixed.

## Patentansprüche

1. Hybridharz mit verbesserten mechanischen Eigenschaften lieferndes flüssiges Zwei- oder Mehrkomponenten-Harzgemisch, das im homogenen Zustand Wasserglas, Polyisocyanat und/oder blockiertes Isocyanat, organische Phosphorsäureester und/oder sonstige Weichmacher und gegebenenfalls die üblichen Zusätze derartiger Systeme enthält, ***dadurch gekennzeichnet,* dass** es außer diesen Komponenten noch mit ungesättigten Monomeren vernetzende Vinylester- und/oder Polyesterharze enthält, wobei die Polyesterharze für die Polyester-Polyurethan-Harze verwendbare Harze, vorzugsweise Polyesterharze auf Isophthalsäurebasis, sind.

2. Flüssiges Harzgemisch nach Anspruch 1, welches bezogen auf seine Gesamtmasse 5-90 Masseteile, insbesondere 10-75 Masseteile, Vinylester- und/oder Polyesterharz enthält.

3. Flüssiges Harzgemisch nach Anspruch 1 oder 2, welches als Vinylesterharz ein Harz auf Bisphenol-A-vinylesterbasis, auf Novolackbasis, auf der Basis epoxydierten Sojaöles oder Gemische der aufgeführten Vinylesterharze enthält.

4. Flüssiges Harzgemisch nach einem der Ansprüche 1-3, welches zur Vernetzung des Vinylester- und/oder Polyesterharzes auch eine oder mehrere ungesättigten Monomerverbindungen, vorzugsweise Styrol, und einen oder mehrere Radikal-initiatoren enthält

5. Flüssiges Harzgemisch nach einem der Ansprüche 1-4, welches auch oberflächenaktive Stoffe enthält.

6. Flüssiges Harzgemisch nach einem der Ansprüche 1-5, welches als Isocyanat blockiertes Isocyanat enthält.

7. Flüssiges Harzgemisch nach Anspruch 6, in dem das Blockierungsmittel des Isocyanats eine ungesättigte, zu Radikalpolymerisation neigende Verbindung ist.

8. Vernetztes Hybridharz, welches aus einer durch die Verbindung der Polyadditionsprodukte von Polyisocyanat und/oder von ganz oder teilweise deblockierten blockierten Polyisocyanatmolekülen einesteils und der durch Radikalpolymerisation entstandenen Reaktionsprodukte von Vinylester- und/oder Polyestermolekülen anderenteils entstandenen Hybridpolymermatrix besteht, welche feindispergierte Polysilikatteilchen enthält.

9. Hybridharz nach Anspruch 8, welches nach Reaktion der Komponenten des flüssigen Harzgemisches gemäß einem der Ansprüche 1-7 entstanden ist.

10. Verfahren zur Herstellung des Hybridharzes nach Anspruch 9 unter Verwendung von Polyisocyanaten, Wasserglas, organischen Phosphorestern und/oder sonstigen Weichmachern und den üblichen Zusätzen derartiger Systeme, ***dadurch gekennzeichnet,* dass** zunächst die Wasserglas enthaltende Komponente mit der Vinylester- und/oder Polyesterharz enthaltenden Komponente vermischt, zu der erhaltenen milchartigen Flüssigkeit die das Isocyanat und/oder blockierte Isocyanat enthaltende Komponente zugegeben, das Ganze homogenisiert und das Gemisch aushärten gelassen wird.

11. Verfahren nach Anspruch 10, ***dadurch gekennzeichnet,* dass** zur Vernetzung des Vinylester- und/oder Polyesterharzes eine oder mehrere ungesättigte Verbindungen verwendet werden.

12. Verfahren nach Anspruch 10 oder 11, ***dadurch gekennzeichnet,* dass** man der das Isocyanat enthaltenden Komponente auf die Gesamtmasse des Hybridharzes bezogen höchstens 5 Masse%, insbesondere höchstens 1 Masse%, oberflächenaktive Substanz zusetzt.

13. Verfahren nach einem der Ansprüche 10-12, ***dadurch gekennzeichnet,* dass** 10-75 Masseteile wenigstens eines Vinylester- und/oder Polyestergrundharzes, 2-45 Masseteile wenigstens eines mit dem Vinylgrundharz zur Bildung eines vernetzten Polymers fähigen ungesättigten Monomers, 2,5-45 Masseteile Wasserglas, 2,5-65 Masseteile wenigstens eines Polyisocyanates und/oder blockierten Polyisocyanates, 5-35 Masseteile wenigstens eines organischen Phosphorsäureesters und/oder sonstigen Weichmachers, 0,02-2 Masseteile wenigstens eines Initiators mit freien Radikalen und gewünschtenfalls wenigstens einen der üblichen Hilfs- und/oder Zusatzstoffe in der zur Erzielung von 100 Masseteilen erforderlichen Menge mit einander vermischt werden und das Gemisch erhärten gelassen wird.

14. Verbund, welcher aus den Hybridharzen gemäß Anspruch 8 oder 9 und bekannten Füllstoffen, insbesondere Glasgewebe, Glasmatte, Glasfäden, besteht.

15. Verfahren zur Herstellung von Verbunden, ***dadurch gekennzeichnet,* dass** in ein Hybridharz nach Anspruch 8 oder 9 oder in ein nach den Ansprüchen 11-14 hergestelltes Hybridharz Füll- oder Verstärkerstoffe eingearbeitet werden.

16. Zum Transport und zur Lagerung geeigneter Mehrkomponenten-Set aus Hybridharzgrundstoffen, welcher als Komponente A1 in ungesättigtem Monomer gelöstes Vinylester- und/oder Polyesterharz, als Komponente A2 Wasserglas und gegebenenfalls darin lösliche Initiatoren mit freien Radikalen und sonstige Zusätze und als Komponente B Polyisocyanat und/oder blockiertes Polyisocyanat, organische Phosphorsäureester und/oder sonstige Weichmacher und gegebenenfalls organische Initiatoren mit freien Radikalen und sonstige Zusätze enthält.

17. Set nach Anspruch 16, bei welchem die den Vinylester und/oder Polyester enthaltende Komponente A1 und die das Isocyanat in blockierter Form enthaltende Komponente B miteinander vermischt sind.

## Revendications

1. Mélange liquide de résine pour la préparation d'une résine hybride à propriétés mécaniques améliorées, comprenant deux ou plusieurs composants consistant, après homogénéisation, en verre soluble, un polyisocyanate et/ou isocyanate bloqué, un ester organique d'acide phosphorique et/ou d'autres plastifiants, et éventuellement des additifs habituels des ces systèmes, **caractérisé en ce qu'**il contient également une résine ester vinylique et/ou polyester réticulant avec des monomères insaturés, où la résine polyester, préférablement à base de l'acide isophtalique, convient pour la préparation d'une résine hybride du type polyester-polyuréthane.

2. Le mélange liquide de résine selon la revendication 1 contenant de 5 à 90 parties en poids, préférablement de 10 à 75 parties en poids de l'ester vinylique et/ou de résine polyester.

3. Le mélange liquide de résine selon la revendication 1 ou 2 contenant comme ester vinylique une résine ester vinylique à base de bisphenol-A, une résine ester vinylique à base de novolac, une résine ester vinylique à base de l'huile de soya epoxidée ou le mélange de celles-ci.

4. Le mélange liquide de résine selon l'une quelconque des revendications 1 à 3, contenant également un ou plusieurs composés monomères insaturés, préférablement le styrène et un ou plusieurs initiateurs à radical libre pour réticuler la résine ester vinylique et/ou polyester.

5. Le mélange liquide de résine selon l'une quelconque des revendications 1 à 4 contenant également un agent de surface.

6. Le mélange liquide de résine selon l'une quelconque des revendications 1 à 5 contenant comme isocyanate un isocyanate bloqué.

7. Le mélange liquide de résine selon la revendication 6 dans lequel l'agent de blocage dans l'isocyanate bloqué est un composé insaturé convenable pour une polymérisation radicale.

8. Une résine hybride réticulée comprenant une matrice polymère hybride obtenu par la liaison entre d'une part le produit de réaction de la polyaddition de molécules de polyisocyanate et/ou polyisocyanate débloqué partiellement ou totalement et d'autre part le produit de réaction de la polymérisation radicale de motifs d'ester vinylique et/ou polyester, dans laquelle la matrice contient des particules de polysilicate finement dispersées.

9. La résine hybride selon la revendication 8 obtenue après la réaction des composants du mélange liquide de résine selon l'une quelconque des revendications 1 à 7.

10. Procédé pour la préparation de la résine hybride selon la revendication 9 en utilisant des polyisocyanates, un verre soluble, un ester organique d'acide phosphorique et/ou d'autres plastifiants et les additifs habituels des ces systèmes, **caractérisé en ce que** l'on mélange d'abord le composant contenant le verre soluble avec le composant contenant la résine d'ester vinylique et/ou polyester, après on additionne au liquide obtenu, ayant l'apparence du lait, le composant contenant l'isocyanate et/ou l'isocyanate bloqué, on l'homogénéise et on laisse durcir le mélange.

11. Le procédé selon la revendication 10, **caractérisé en ce que** l'on utilise un ou plusieurs composés insaturés pour réticuler la résine ester vinylique et/ou polyester.

12. Le procédé selon la revendication 10 ou 11, **caractérisé en ce que** l'on additionne au composant contenant l'isocyanate au plus 5 %, préférablement au plus 1 %, par rapport au poids total de la résine hybride, un agent de surface également.

13. Le procédé selon l'une quelconque des revendications 10 à 12, **caractérisé en ce que** l'on mélange les composants suivants en quantités nécessaires pour obtenir 100 parties: 10 à 75 parties d'un ou plusieurs résines ester vinylique et/ou polyester, 2 à 45 parties d'un ou plusieurs monomères capables de former un copolymère réticulé avec la résine ester vinylique de base, 2,5 à 45 parties de verre soluble, 2,5 à 65 parties d'un ou plusieurs polyisocyanates et/ou polyisocyanates bloqués, 5 à 35 parties d'un ou plusieurs esters d'acide phosphorique organique et/ou d'autres plastifiants, 0,02 à 2 parties d'un ou plusieurs initiateurs à radical libre et si l'on souhaite, un ou plusieurs d'autres additifs usuels, et on laisse durcir le mélange.

14. Un composite comprenant la résine hybride selon la revendication 8 ou 9 et des renforts connus, préférablement un tissu de verre, mat de verre, fibre de verre.

15. Procédé pour la préparation d'un composite, **caractérisé en ce que** l'on introduit de la charge ou du renfort dans la résine hybride selon la revendication 8 ou 9 ou préparée selon l'une quelconque des revendications 11 à 14.

16. Kit pour stocker et transporter les composants d'une résine hybride de départ comprenant une résine ester vinylique et/ou polyester en solution dans un monomère insaturé en tant que composant A1, le verre soluble et éventuellement un initiateur radical et d'autres additifs solubles dans le verre soluble en tant que composant A2, un polyisocyanate et/ou isocyanate bloqué, un ester d'acide phosphorique organique et/ou d'autres plastifiants et éventuellement un ou plusieurs initiateurs organiques à radical libre et d'autres additifs en tant que composant B.

17. Le kit selon la revendication 16 dans lequel le composant A1 contenant l'ester vinylique et/ou le polyester et le composant B contenant l'isocyanate en forme bloquée sont mélangés.
